# EUROPÄISCHE PATENTSCHRIFT

(11) **EP 3 974 349 B1**
(45) Veröffentlichungstag und Bekanntmachung des Hinweises auf die Patenterteilung: **30.10.2024**
(21) Anmeldenummer: 21193075.5
(22) Anmeldetag: 25.08.2021
(51) Int. Cl.: B65G 1/04, B65G 1/06

(54) **SHUTTLELAGER**
SHUTTLE WAREHOUSE
ENTREPÔT DE NAVETTES

(30) Priorität: 28.09.2020 DE 202020105525 U
(43) Veröffentlichungstag der Anmeldung: 30.03.2022
(73) Patentinhaber: BITO-Lagertechnik Bittmann GmbH, 55590 Meisenheim (DE)
(72) Erfinder: NEU, Sascha, 66885 Altenglan (DE); SPONHEIMER, Helmut, 55569 Nussbaum (DE)
(74) Vertreter: Richardt Patentanwälte PartG mbB

(56) Entgegenhaltungen:
- DE-A1- 102007 014 368
- DE-A1- 102014 114 496
- DE-U1- 202016 106 276

## Beschreibung

Die Erfindung betrifft ein Shuttlelager.

Aus dem Stand der Technik sind verschiedene Vorrichtungen bekannt, mittels welcher Stückgut, beispielsweise auf Palletten angeordnet, gelagert werden kann. So beschreibt beispielsweise die DE 38 40 648 A1 eine Ein-/Aus-Hochregallager-Einrichtung mit einer Mehrzahl von Regalkanälen in einer Ebene mit einer Mehrzahl von übereinander liegenden Ebenen von Kanälen mit zugeordneten Förderzeugen. Ein weiteres Kanallager als Spezialfall eines Shuttlelagers ist aus der DE 10 2010 029 563 B4 bekannt.

Allgemein sind Shuttlelager Regallager für Stückgut, bei denen eine Vielzahl von Ladeeinheiten in einzelnen Kanälen entweder hintereinander angeordnet oder seitlich von den Kanälen gelagert werden können. Um nun ein Umlagern, Einlagern oder Auslagern von Stückgut zu ermöglichen, kommt ein Umsetzgerät in Form eines Verteilerfahrzeugs zum Einsatz, welches auch als Shuttle, Kanalfahrzeug oder Satellitenfahrzeug bezeichnet wird. Das Verteilerfahrzeug ist dazu ausgebildet, Ladungsträger zu unterfahren, anzuheben und innerhalb des Kanals im angehobenen Zustand zu bewegen. So können Einlagerungen und Auslagerungen durch Verfahren der Ladungsträger im Kanal vorgenommen werden. Im Falle dessen die Ladungsträger seitlich von den Kanälen gelagert werden, verfügt das Verteilerfahrzeug über entsprechende Mittel, um die Ladungsträger anzuheben, aus den seitlichen Lagerpositionen in den Kanal zu ziehen und dann innerhalb des Kanals im angehobenen Zustand zu bewegen.

Aus der DE 2016 106 276 U1, welche ein Shuttlelager nach dem Oberbegriff des Anspruchs 1 offenbart, ist es bekannt, Segmente der Laufschienen für das Shuttle durch Bolzen an dem Gestell des Regals zu fixieren.

Demgegenüber liegt der Erfindung die Aufgabe zugrunde, ein verbessertes Shuttlelager zu schaffen.

Die der Erfindung zugrunde liegende Aufgabe wird mit den Merkmalen des unabhängigen Schutzspruchs gelöst. Eine bevorzugte Ausführungsformen der Erfindung ist in dem abhängigen Schutzanspruch angegeben.

Es wird ein Shuttlelager zur Lagerung von Ladungsträgern angegeben, wobei das Shuttlelager ein Gestell und einen Kanal aufweist, wobei das Gestell Laufschienen aufweist, wobei die Laufschienen zur Führung einer Fahrbewegung eines zum räumlichen Versetzen der Ladungsträger ausgebildeten Verteilerfahrzeugs im Kanal auf einer Lauffläche der Laufschienen ausgebildet sind, wobei die Laufschienen jeweils durch in Längsrichtung der Laufschienen hintereinander angeordnete Segmente gebildet werden, wobei die Segmente an dem Gestell durch Schweißbolzen fixiert sind, wobei die Fixierung daraus resultiert, dass die Schweißbolzen mit der zur Lauffläche rückwärtigen Seite der Segmente verschweißt sind und die Schweißbolzen jeweils ein Gewinde aufweisen und über die Gewinde mit dem Gestell verschraubt sind. D.h. die Laufschienen führen die Fahrbewegung des Verteilerfahrzeuges auf der Lauffläche.

Z.B. weist das Shuttlelager zumindest den Kanal mit zumindest einer ersten und einer zweiten Ebene auf, wobei die erste Ebene durch die Lauffläche definiert wird und die zweite Ebene der Lagerung von Ladungsträgern dient.

Unter "Ladungsträger" werden beispielsweise Paletten oder verschiedenste Arten von Vorrichtungen verstanden, welche in der Lage sind, gewünschtes zu lagerndes Stückgut aufzunehmen bzw. abzustützen.

Bei der Erfindung weisen die Schweißbolzen jeweils einen Kopf auf. Die jeweilige Verschweißung ist zwischen dem Kopf und dem Segment gegeben, wobei der Durchmesser des Kopfes größer ist als der Durchmesser des Gewindes. Durch den vergrößerten Kopfdurchmesser könnte eine größere Kontaktfläche zwischen dem Segment und dem Schweißbolzen gegeben sein, was eine verbesserte und stabilere Fixierung des Schweißbolzens am Segment ermöglichen könnte. Die Stabilität, mit welcher die Schweißbolzen über die Gewinde am Gestell befestigt sind, lässt sich unabhängig davon durch die Länge des jeweiligen Bereichs festlegen, über welchen das Gewinde des Schweißbolzens in das entsprechende Gegenstück des Gegengewindes der zugehörigen Schraubenmutter eingreift - die Schraubmutter wird in diesem Beispiel z.B. mit dem Gestell gekontert.

Ausführungsformen der Erfindung könnten den Vorteil haben, dass eine Geräuschentwicklung beim Überfahren der Stellen, an welchen die Segmente an dem Gestell fixiert sind, minimiert wird. Die Erfindung hat überraschender Weise erkannt, dass eine Quelle der Geräuschentwicklung beim Betrieb eines Shuttlelagers daher rührt, dass die Räder des Verteilerfahrzeuges beim Überfahren der Befestigungsstellen schon bei kleinsten Unebenheiten an dieser Stelle Schlaggeräusche und Erschütterungen verursachen. Dadurch, dass nun die Schweißbolzen rückwärtig zur Lauffläche der Segmente an den Segmenten angeschweißt sind, gibt es keine Teile der der Laufschienen, welche sich außerhalb oder sogar in der Lauffläche befinden und somit - seien es Vertiefungen oder Erhebungen - Unebenheiten darstellen könnten.

Ferner hat die Erfindung erkannt, dass auch unterschiedlichen Materialien beim Überfahren zu unterschiedlichen Fahrgeräuschen führen können. Selbst bündig mit der Lauffläche abschließende Befestigungsmittel (z.B. in Aussparungen der Segmente aufgenommene Einpressgewindebolzen) könnten also beim Überfahren mit den Rädern des Verteilerfahrzeuges zu einer Veränderung des Laufgeräuschs und damit zu einer Variation der durch den Fahrvorgang hervorgerufenen Geräuschkulisse führen. Im Fall von großen Shuttlelagern könnte dies für sich dort aufhaltendes Personal zu einer unangenehm empfundenen Geräuschentwicklung führen. All dies könnte durch die Verwendung der Schweißbolzen vermieden werden, da diese rückwärtig zu der Lauffläche an den Segmenten angeschweißt sind und damit die Lauffläche "unberührt" lassen.

Aufgrund dessen keine Unebenheiten im Bereich der Lauffläche vorhanden sind, werden auch etwaige Erschütterungen des Verteilerfahrzeuges beim Überfahren der Befestigungsstellen minimiert oder gar vermieden. Dies könnte dann von Relevanz sein, wenn das Stückgut gegen Erschütterungen empfindlich reagieren könnte. Empfindliches Stückgut könnten hier bestimmte Chemikalien oder Elektronikbauteile sein. Insgesamt könnte somit einer etwaig erschütterungsbedingten Beschädigung des Shuttles und/oder das durch das Shuttle transportierten Transportguts vorgebeugt werden.

Ein weiterer Vorteil der Verwendung von Schweißbolzen könnte darin bestehen, dass hierfür keine Befestigungslöcher in den Segmenten vorgesehen werden müssen. Die Befestigung mit dem Gestell kann damit an beliebigen Stellen der Segmente erfolgen, sodass nebst dem Vermeiden des Vorsehens der Löcher (Kostenaspekt) auch der Planungsaufwand bezüglich der relativen Positionierung von Gestell (insbesondere der dort vorgesehenen Aufnahmen für die Gewinde der Schweißbolzen) und der Segmente minimiert werden könnte.

Nach einer Ausführungsform der Erfindung sind die Schweißbolzen kraftschlüssig durch in die Gewinde eingreifende Muttern mit dem Gestell verschraubt. Damit ist es zum Beispiel möglich, nachträglich die Segmente vom Gestell zu lösen und insbesondere einzelne Segmente auszutauschen. Dies könne beispielsweise notwendig werden, wenn eines der Segmente beschädigt ist.

Im Folgenden werden bevorzugte Ausführungsformen der Erfindung anhand der Zeichnungen näher erläutert. Es zeigen:
Figur 1 eine schematische perspektivische Darstellung eines Shuttlelagers,
Figur 2 eine schematische Querschnittansicht eines Kanals eines Shuttlelagers,
Figur 3 eine perspektivische Ansicht zweier Segmente,
Figur 4 eine perspektivische Ansicht zweier Segmente,
Figur 5 eine Schnittansicht durch ein Segment,
Figur 6 eine Schnittansicht durch ein Segment,
Figur 7 eine Schnittansicht durch ein Segment,
Figur 8 ein Shuttlelager 100.

Im Folgenden werden einander ähnliche Elemente mit den gleichen Bezugszeichen gekennzeichnet.

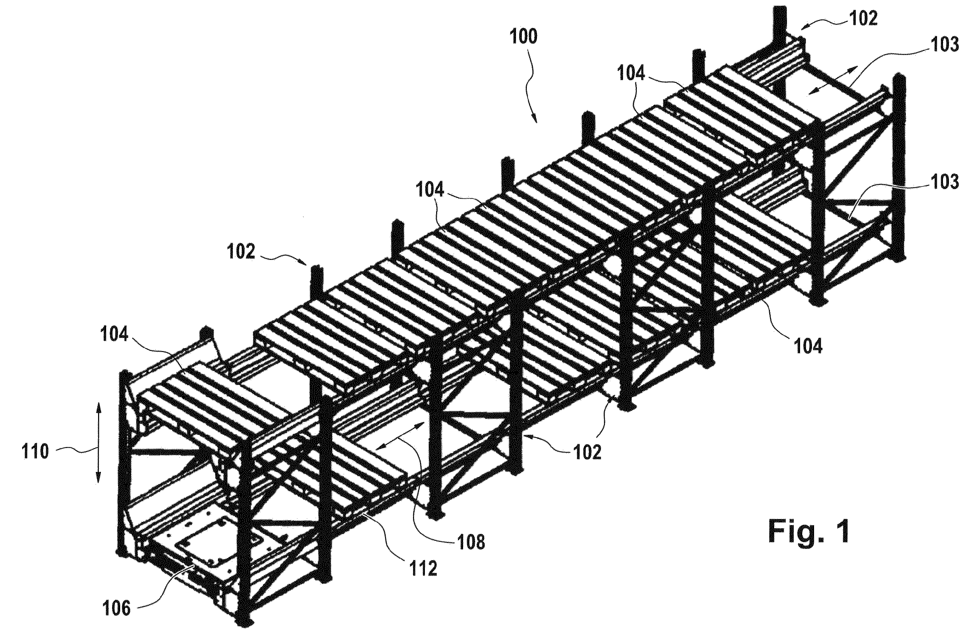

Die Figur 1 zeigt ein Kanallager als Spezialfall eines Shuttlelagers 100 mit einem einzelnen Kanal mit einer in Figur 1 nicht näher ersichtlichen ersten und zweiten Ebene, wobei die erste Ebene eine Lauffläche für ein Verteilerfahrzeug 106 und die zweite Ebene zur Aufnahme von Ladungsträgern 104 dient. Ersichtlich sind jedoch die erste Ebene bildende Laufschienen 112 zur Führung einer Fahrbewegung eines Verteilerfahrzeugs 106 in Richtung 108, also längs der Erstreckungsrichtung der Laufschienen 112.

In dem in Figur 1 gezeigten Kanal befinden sich eine Vielzahl der Ladungsträger 104, im vorliegenden Fall Paletten. Das Verteilerfahrzeug 106 kann nun durch eine entsprechende Bewegung in Richtung 108 längs der Laufschienen 112 unterhalb einer Palette 104 bewegt werden, woraufhin die Palette 104 durch das Verteilerfahrzeug angehoben werden kann in Richtung 110, um daraufhin innerhalb des Kanals in Richtung 108 durch eine Bewegung des Verteilerfahrzeugs in Richtung 108 verfahren zu werden. Damit ist ein Einlagern und Auslagern der Paletten 104 mit deren in Figur 1 nicht ersichtlichem Stückgut möglich.

Ferner in Figur 1 ersichtlich, sind Rahmenverstrebungen 102, durch welche in Verbindung mit den Laufschienen 112 ein stabiler Gesamtverbund des Kanallagers 100 gebildet wird. Die Rahmenverstrebungen 102 sind in quer zur Laufrichtung 108 verlaufende Traversen 103 miteinander verbunden. Die Laufschienen 112 sind z.B. an den Traversen 103 über Schweißbolzen fixiert. Alternativ können Winkelprofile "Konsolen" zum Einsatz kommen, über welche die Laufschienen 112 über Schweißbolzen an den Rahmenverstrebungen fixiert sind. Insgesamt bilden die Traversen und die Rahmenverstrebungen ein Teil des sogenannten "Gestells" des Kanallagers.

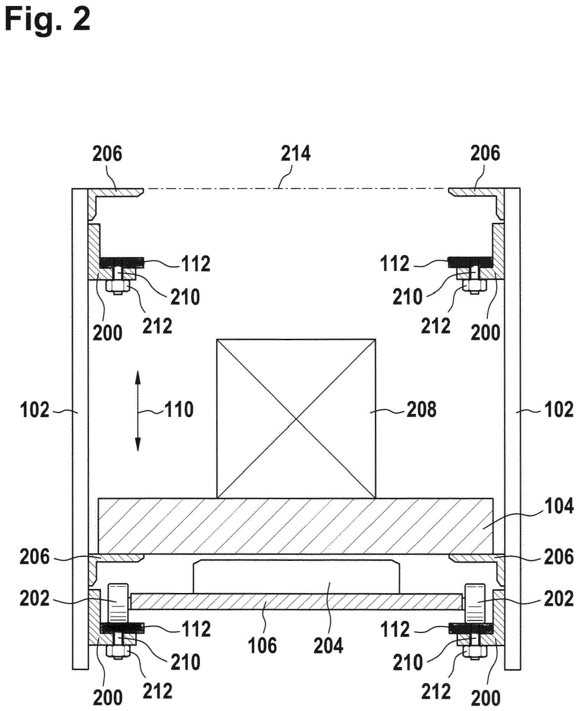

Die Figur 2 zeigt nun eine Querschnittansicht des Kanallagers 100. Deutlich ersichtlich sind wiederum Teile der senkrecht angeordneten Rahmenverstrebungen 102, an welchen optimale Konsolen 200 fixiert sind. Diese Konsolen 200 dienen der Aufnahme und Fixierung der Laufschienen 112. Die Laufschienen 112 definieren dabei die Lauffläche für die Räder 202 des Verteilerfahrzeugs 106.

Ferner sind in der Figur 2 Konsolen 206 gezeigt, welche eine auf Lagefläche für die Paletten 104 bilden. Durch die Auflagefläche wird damit die zweite Ebene 214 gebildet.

Zur Bewegung einer Palette 104 wird das Verteilerfahrzeug 106 unter die Palette 104 verfahren, um daraufhin durch einen Mechanismus 204 des Verteilerfahrzeugs in Richtung 110 angehoben zu werden, wodurch ein Anheben der Palette 104 von der Laufschiene 112 erfolgt. Die Palette 104 kann zusammen mit dem Verteilerfahrzeug 106 entlang der Laufschienen 112 verfahren werden, um die Palette 104 daraufhin an einer gewünschten Position wieder abzustellen.

Die Laufschienen 112 werden durch in Längsrichtung der Laufschienen hintereinander angeordnete Segmente gebildet. Diese Segmente sind dabei z.B. über die Konsolen 200 an dem Gestell des Kanallagers über Schweißbolzen 210 fixiert. Die Schweißbolzen 210 sind über ihr Gewinde mit dem Gestell durch eine entsprechende Mutter 212 verschraubt.

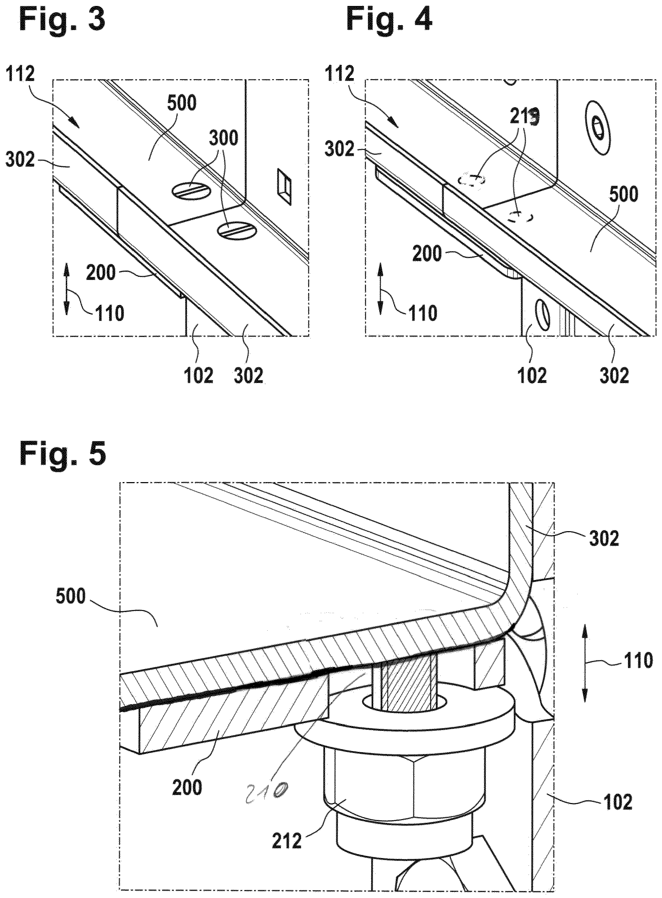

Die Figuren 3 und 4 zeigen perspektivische Ansichten zweier unmittelbar aneinander angrenzender Segmente 302, welche zusammen jeweils einen Teil der Laufschiene 112 bilden. Die Oberseiten der Segmente 302 bilden eine Lauffläche 500. Die Segmente 302 liegen auf jeweils z.B. einer Konsole 200 oder einem anderen Teil des Gestells des Regals auf und sind mit der jeweiligen Konsole über Befestigungsmittel fixiert. In Figur 3 ist dabei die Fixierung über eine Schlitzschraube 300 realisiert, wohingegen in der Figur 4 die Fixierung über Schweißbolzen 210 realisiert ist.

Fährt nun in der Figur 3 ein Verteilerfahrzeug mit seinen Rädern 202 über die Köpfe der Schlitzschrauben 300, so kann dieses überfahren der Schlitzschrauben 300 zu einer Geräuschentwicklung führen, da zum einen die Schlitze der Schrauben eine Unebenheit für die darüber rollenden Räder 202 bilden und zum anderen aufgrund von Fertigungstoleranzen die Köpfe der Schrauben 300 nie vollständig mit der Lauffläche der Laufschienen 112 bündig sind. "Bündig" bedeutet hier, dass in der Richtung 110 gesehen die durch die Oberfläche der Köpfe der Schrauben 300 gebildete Ebene mit der durch die Lauffläche der Laufschienen112 gebildeten Ebene identisch ist.

In der Variante der Figur 4 hingegen ist aufgrund der Verwendung der Schweißbolzen 210 gewährleistet, dass die Lauffläche 500 durch die Fixierung am Regalgestell 102, z.B. über die Konsolen 200 oder entsprechende Befestigungspunkte des Gestells unverändert bleibt. Die Räder des über die Laufschienen 500 fahrenden Verteilerfahrzeugs nehmen also das Vorhandensein einer etwaigen Fixierung der Segmente 302 am Regal überhaupt nicht wahr. So können die Räder 202 des Verteilerfahrzeugs 106 über die Punkte der Lauffläche ohne Widerstand hinwegrollen, unterhalb derer die Segmente 302 an den Konsolen 200 fixiert sind. Eine Geräuschentwicklung aufgrund des Vorhandenseins dieser Fixierungspunkte, welche überrollt werden, wird vermieden.

In der Figur 4 sind die Punkte 219, unterhalb derer auf der der Lauffläche 500 abgewandten Unterseite der Segmente 302 die Schweißbolzen an die Segmente angeschweißt sind, mit gestrichelten Linien gekennzeichnet. Dies dient nur zu Anschauungszwecken - in der Realität sollte das Vorhandensein der mit den Segmenten 302 verschweißten Schweißbolzen 210 von der Seite der Lauffläche 500 aus nicht wahrnehmbar sein (z.B. keine Erhebung oder Vertiefung oder Materialveränderung).

Die Figur 5 zeigt eine Schnittansicht, welche im Querschnitt ein Segment 302 mit seiner dadurch gebildeten Lauffläche 500 zeigt. Das Segment 302 ist z.B. über die Konsole 200 an einer z.B. Regalstrebe 102 fixiert. Die Befestigung des Segments 302 Konsole 200 erfolgt über einen Schweißbolzen 210, wobei dieser über sein Gewinde und die Mutter 212 an der Konsole 200 fixiert ist.

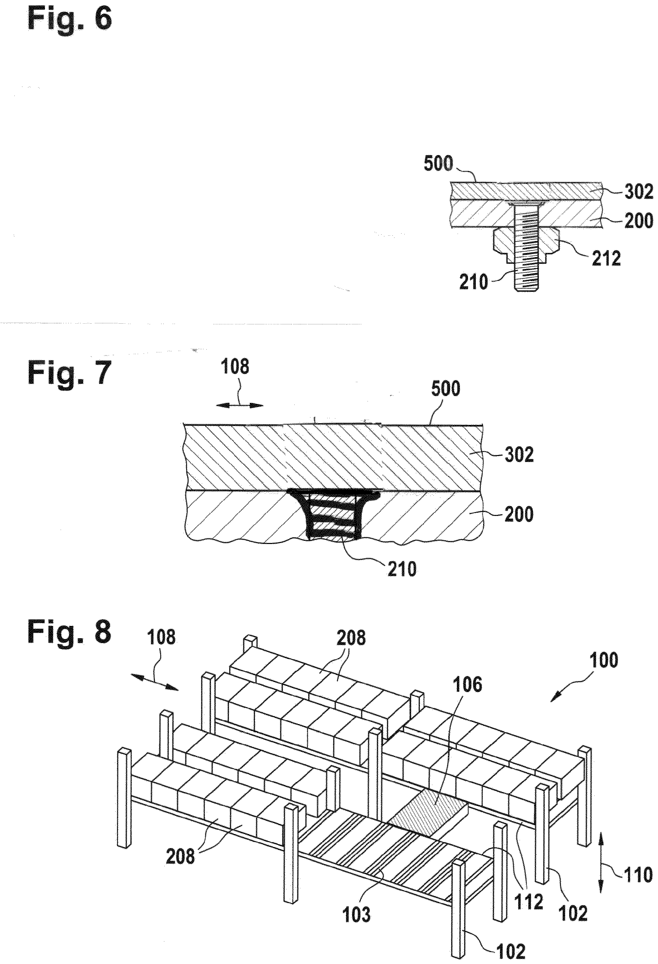

Die Figuren 6 und 7 zeigen jeweils eine Querschnittsansicht eines Segments 302 mit daran angeschweißtem Schweißbolzen 210. In Figur 6 ist zusätzlich die optionale Konsole 200 zu erkennen, welche eine Öffnung aufweist, durch welche der Schweißbolzen hindurchgeführt ist und über die Mutter 212 gekontert werden kann. Der Schweißbolzen 210 ist dabei in der Erstreckungsrichtung der Lauffläche (Fahrtrichtung des Verteilerfahrzeugs) formschlüssig in der entsprechenden Aussparung der Konsole 200 aufgenommen.

Wie der Detailansicht der Figur 7 entnommen werden kann, weist die Kopfseite des Schweißbolzens 210 in dem Bereich, in welchem sie mit der Konsole 302 verschweißt ist, optional einen größeren Durchmesser auf, als deren Gewindedurchmesser. In dieser Variante ergibt sich durch den vergrößerten Kopfdurchmesser eine vergrößerte Kontaktfläche zwischen der Unterseite des Segments 302 und dem Gewindebereich des Schweißbolzens 210. Aufgrund der vergrößerten Kontaktfläche könnte zum Beispiel sichergestellt werden, dass die Stabilität der Anbindung des Schweißbolzens an das Segment erhöht ist immer gleich zu einer Variante, bei welcher der Kopf des Schweißbolzens denselben Durchmesser aufweist wie sein Gewinde. Der Schweißbolzen könnte ausgehend vom Gewindebereich mit konstantem Außendurchmesser zur Kontaktstelle mit dem Segment 302 hin eine nach außen gekrümmte Außenfläche aufweisen - der Außendurchmesser des Schweißbolzens nimmt also in dessen Kopfbereich insbesondere stetig zu.

Die Figur 8 zeigt ein Shuttlelager 100, bei dem im Gegensatz zum Shuttlelager 100 der Figur 1 die Ladungsträger 208 nicht hintereinander angeordnet im Kanal (d.h. in Richtung 108) gelagert werden, sondern links und rechts seitlich des Kanals (senkrecht dazu). Das Verteilerfahrzeug 106 kann auf den Laufschienen 112 verfahren werden und ist dazu in der Lage, links und rechts Ladungsträger 208 von den Traversen 103 abzuheben, auf das Verteilerfahrzeug zu bewegen und dann auf dem Verteilerfahrzeug befindlich in Richtung 108 zu transportieren. Bezüglich der Ausgestaltung der Laufschienen, insbesondere im Hinblick auf die Fixierung deren Segmente, gilt analog das bezüglich der Figuren 1-7 gesagte.

### Bezugszeichenliste

- 100: Shuttlelager
- 102: Rahmenverstrebung
- 103: Traverse
- 104: Palette
- 106: Verteilerfahrzeug
- 108: Richtung
- 110: Richtung
- 112: Laufschiene
- 200: Konsole
- 202: Rad
- 204: Hebemechanismus
- 206: Konsole
- 208: Stückgut
- 210: Schweißbolzen
- 214: zweite Ebene
- 219: Kontaktpunkt
- 300: Schraube
- 302: Segment
- 500: Lauffläche

## Patentansprüche

1. Shuttlelager (100) zur Lagerung von Ladungsträgern (104), wobei das Shuttlelager (100) ein Gestell (102) und einen Kanal aufweist, das Gestell (102) Laufschienen (112) aufweist, wobei die Laufschienen (112) zur Führung einer Fahrbewegung eines zum räumlichen Versetzen der Ladungsträger (104) ausgebildeten Verteilerfahrzeugs (106) im Kanal auf einer Lauffläche (500) der Laufschienen (112) ausgebildet sind, wobei die Laufschienen (112) jeweils durch in Längsrichtung der Laufschienen (112) hintereinander angeordnete Segmente (302) gebildet werden, **dadurch gekennzeichnet, dass** die Segmente (302) an dem Gestell (102) durch Schweißbolzen (210) fixiert sind, wobei die Fixierung daraus resultiert, dass die Schweißbolzen (210) mit der zur Lauffläche (500) rückwärtigen Seite der Segmente verschweißt sind und die Schweißbolzen (210) jeweils ein Gewinde aufweisen und über die Gewinde mit dem Gestell (102) verschraubt sind, wobei die Schweißbolzen (210) jeweils einen Kopf aufweisen und die jeweilige Verschweißung zwischen dem Kopf und dem Segment gegeben ist, wobei der Durchmesser des Kopfes größer ist als der Durchmesser des Gewindes.

2. Shuttlelager (100) nach Anspruch 1, wobei die Schweißbolzen (210) kraftschlüssig durch in die Gewinde eingreifende Muttern mit dem Gestell (102) verschraubt sind.

## Claims

1. Shuttle warehouse (100) for storing load carriers (104), wherein the shuttle warehouse (100) has a frame (102) and a channel, the frame (102) comprises guide rails (112), wherein the guide rails (112) are configured for guiding a movement of a shuttle vehicle (106) configured for spatially moving the load carriers (104) in the channel on a running surface (500) of the guide rails (112), wherein the guide rails (112) are each formed by segments (302) arranged one behind the other in the longitudinal direction of the guide rails (112), **characterized in that** the segments (302) are fixed to the frame (102) by weld studs (210), wherein the fixing results from the weld studs (210) being welded to the side of the segments facing away from the running surface (500) and the weld studs (210) each have a thread and are screwed to the frame (102) via the threads, wherein the weld studs (210) each have a head and the respective weld is between the head and the segment, wherein the diameter of the head is larger than the diameter of the thread.

2. Shuttle warehouse (100) according to claim 1, wherein the weld studs (210) are screwed in a force-fitting manner to the frame (102) by nuts engaging in the threads.

## Revendications

1. Entrepôt de navettes (100) permettant le stockage de supports de charges (104), l'entrepôt de navettes (100) présentant un bâti (102) et un canal, le bâti (102) présente des rails de guidage (112), où les rails de guidage (112) sont conçus pour le guidage d'un mouvement de déplacement d'un véhicule de distribution (106)) conçu pour le déplacement spatial des supports de charges (104) dans le canal sur une surface de roulement (500) des rails de guidage (112), où les rails de guidage (112) sont formés respectivement par des segments (302) disposés les uns derrière les autres dans la direction longitudinale des rails de guidage (112), **caractérisé en ce que** les segments (302) sont fixés sur le bâti (102) par des boulons soudés (210), où la fixation résulte du fait que les boulons soudés (210) sont soudés avec le côté arrière des segments par rapport à la surface de roulement (500) et les boulons soudés (210) présentent respectivement un filetage et sont vissés avec le bâti (102) par le biais des filetages, où les boulons soudés (210) présentent respectivement une tête et le soudage respectif entre la tête et le segment est réalisé, où le diamètre de la tête est supérieur au diamètre du filetage.

2. Entrepôt de navettes (100) selon la revendication 1, dans lequel les boulons soudés (210) sont vissés avec le bâti (102) en force dans les écrous en prise dans les filetages.
